# EUROPÄISCHE PATENTSCHRIFT

(11) **EP 1 279 985 B1**
(45) Veröffentlichungstag und Bekanntmachung des Hinweises auf die Patenterteilung: **02.03.2005**
(21) Anmeldenummer: 02016543.7
(22) Anmeldetag: 24.07.2002
(51) Int. Cl.: G02B 21/00, G02B 21/36, H04N 7/18

(54) **Vorrichtung zur Bildaufnahme eines in einem Mikroskop projizierten Bildes**
Device for aquiring an image projected in a microscope
Dispositif pour enregistrer des images projetées dans un microscope

(30) Priorität: 25.07.2001 DE 10136241
(43) Veröffentlichungstag der Anmeldung: 29.01.2003
(73) Patentinhaber: degli Innocenti, Carla, 41564 Kaarst (DE)
(72) Erfinder: degli Innocenti, Carla, 41564 Kaarst (DE)
(74) Vertreter: Christophersen & Partner

(56) Entgegenhaltungen:
- EP-A- 0 624 258
- DE-A- 19 816 952
- US-A- 4 302 087
- US-A- 5 903 306
- PATENT ABSTRACTS OF JAPAN vol. 2000, no. 01, 31. Januar 2000 (2000-01-31) -& JP 11 295611 A (NIKON CORP), 29. Oktober 1999 (1999-10-29)
- PATENT ABSTRACTS OF JAPAN vol. 2000, no. 14, 5. März 2001 (2001-03-05) -& JP 2000 321505 A (SONY CORP), 24. November 2000 (2000-11-24)

## Beschreibung

Die vorliegende Erfindung betrifft eine Vorrichtung zur Bildaufnahme eines in einem Mikroskop projizierten Bildes mit einem an einem Gehäuse des Mikroskops befestigbaren Projektionsgehäuse, welches eine daran beweglich angeordnete Videokamera gegen Lichteinfall von außen abschirmt, wobei das projizierte Bild als Lichtstrahl aus dem Gehäuse des Mikroskops auf die optische Achse der Videokamera gelangt.

Es sind insbesondere im Bereich der Forschung eine Vielzahl von Mikroskopen bekannt. Ein Mikroskop besteht in der Regel aus einem Fuß, einem Stativ, einem Objekttisch und einem optischen Gehäuse. Dabei ist das Stativ an dem Fuß fixiert und an diesen der Objekttisch und das optische Gehäuse. An dem optischen Gehäuse befinden sich ein Revolver mit einer Mehrzahl von Linsen, oder auch Objektive genannt, und ein Tubus, der ebenfalls Linsen beinhaltet, die das Okular bilden. Das zu untersuchende Objekt wird auf dem Objekttisch befestigt und beleuchtet. Das von dem Objekt reflektierte oder durch das Objekt hindurchtretende Licht folgt in Form eines Lichtstrahls oder Lichtbündels einem Lichtstrahlengang in dem optischen Gehäuse und kommt schließlich aus dem Tubus heraus, wo es für den Betrachter durch den Einfluß der im Strahlengang befindlichen Linsen und anderen optischen Elemente ein vergrößertes, projiziertes Bild des auf dem Objekttisch befindlichen Objekts erzeugt.

Bei einer Vorrichtung nach der EP 0 624 258 B1 ist an dem optischen Gehäuse neben den Objektiven und dem Tubus ein Projektionsgehäuse angebracht, in dem sich eine Videokamera befindet. Das Projektionsgehäuse verhindert das Eindringen des Lichts von außen in den Innenraum zu der Videokamera und es entsteht der sogenannte Schwarzkammer-Effekt. An dem Projektionsgehäuse ist eine Öffnung vorgesehen, die bei Befestigung des Projektionsgehäuses auf dem optischen Gehäuse mit einer Öffnung in dem optischen Gehäuse fluchtet. Durch diese Öffnungen führt neben dem durch den Tubus führenden ein weiterer Lichtstrahlengang in den abgedunkelten Innenraum des Projektionsgehäuses und trifft entlang der optischen Achse der Videokamera in die Videokamera und ein vergrößertes projiziertes Abbild von dem Objekt kann mit der Videokamera aufgenommen werden. Die Bildaufnahme des projizierten Bilds erlaubt es nunmehr, auf ein Wiedergabegerät, wie beispielsweise ein Bildschirm, übertragen und gezeigt zu werden oder auf einem entsprechenden Medium gespeichert zu werden. Vorgesehen ist ferner ein Motor zum Einstellen der Höhe der Videokamera innerhalb des Projektionsgehäuses zur Veränderung des Abstandes zwischen dem Projektionsobjektiv und der Videokamera, um hierdurch den Vergrößerungsmaßstab eines ausgewählten projizierten Bildes durch Einstellung der Höhe der Videokamera zu steuern, wobei die Schärfentiefe beibehalten wird.

Bei Bildaufnahmen mit einer Videokamera von projizierten Bildern eines Mikroskops ist es oftmals notwendig, das mit der Videokamera aufgenommene projizierte Bild zu drehen. Zur Durchführung einer solchen Drehung muß bislang das Objekt mühsam auf dem Objekttisch gedreht werden. Das Drehen des Objektes hat den Nachteil, daß das bereits fokussierte und scharfgestellte Objekt verschoben wird und der fokussierte Bereich leicht aus dem Bildbereich der Videokamera herausrutscht und nur schwer wiedergefunden werden kann. Weiterhin kann bei dieser Bewegung des Objekts die Schärfe und die geeignete Beleuchtung desselben verloren gehen. Somit ist das Drehen des Objektes mit Nachteilen verbunden, selbst wenn ein drehbarer Objekttisch bereit steht.

Die Druckschriffen JP 11295611 A, US 4302087 A, DE 19816952 A und JP 2000321505 A offenbaren daher vorrichtungen bei denen eine Videokamera relativ zu den zu untersuchenden Object gedreht werden kann.

Der Erfindung liegt daher die **Aufgabe** zugrunde, das projizierte Bild des Objekts in mehr als nur einer Ausrichtung erfassen zu können, ohne hierzu das Objekt unter dem Objektiv drehen zu müssen.

Gelöst wird die Aufgabe durch eine Vorrichten, nach Anspruch 1. Weitere vorteilhafte Ausgestaltungen sind durch die abhängigen Ansprüche definiert.

Insbesondere wird vorgeschlagen, daß die Videokamera um eine zur optischen Achse zumindest parallele Achse drehbar gelagert ist. Indem die Videokamera um ihre optische oder eine zu ihrer optischen Achse parallele Achse drehbar gelagert ist, ist es möglich das projizierte Bild zu drehen, wobei es nicht mehr notwendig ist, das Objekt auf dem Objekttisch zu drehen. Wenn die Videokamera im wesentlichen um die optische Achse drehbar ist, bleibt die Mitte des Bildes auch während der Drehung der Videokamera im wesentlichen in der Mitte. Ein Nachjustieren des Objekts oder irgendwelcher anderer Elemente, wie der Videokamera oder der Objektbeleuchtung oder des Objekttisches, ist dann nicht nötig. Die Drehung des projizierten Bilds wird vereinfacht und nimmt nahezu keine Zeit in Anspruch. Die Drehung der Kamera sollte am besten innerhalb des Projektionsgehäuses stattfinden, da damit eine ungewollte Berührung der drehenden Kamera und damit eine Zerstörung ihrer Justage vermieden wird. Die gesamte Lagerung ist leicht innerhalb des Projektionsgehäuses vornehmbar und keines der empfindlichen Teile ist der möglichen Gewalt- und Staubeinwirkung von außen ausgesetzt. Das Projektionsgehäuse ist demnach nicht nur dafür vorgesehen, das streuende Licht der Umgebung von der Videokamera fern zu halten. Trotz allem ist es jedoch auch im Sinne der Erfindung, die Videokamera mitsamt des Projektionsgehäuses zu drehen.

Eine weitere vorteilhafte Ausgestaltung der Erfindung sieht vor, daß die Videokamera um 360° um ihre eigene optische Achse drehbar gelagert ist. Wenn die Lagerung der Videokamera es erlaubt, die Videokamera vollständig um 360° zu drehen, so kann das projizierte Bild in jeder Ausrichtung gezeigt werden, unabhängig von der Ausrichtung des Objekts auf dem Objekttisch.

Alternativ ist es möglich, daß die optische Achse der Videokamera von jener optischen Achse geringfügig abweicht, auf der das in dem Mikroskop erzeugte Bild in das Projektionsgehäuse eintritt. In diesem Fall verlaufen die beiden optischen Achsen geringfügig parallel zueinander. Dies kann in bestimmten Fällen ebenfalls von Vorteil sein, z. B. um ein auf dem Objektträger des Mikroskops nicht exakt zentriertes Objekt durch entsprechendes Drehen der Videokamera in einen bestimmten Bereich des Bilderfassungssensors der Videokamera zu bringen.

Vorzugsweise ist die Videokamera innerhalb des Projektionsgehäuses gelagert und mit einem Drehantrieb verbunden. Durch die Verwendung eines Drehantriebs ist eine geeignete Vorrichtung zur Verfügung gestellt, mit welcher eine vereinfachte Drehung der Kamera innerhalb des Projektionsgehäuses möglich ist. Ein entsprechend ausgebildeter Drehantrieb erlaubt es, von außerhalb des Projektionsgehäuses die Drehung und damit die Position der Videokamera innerhalb des Projektionsgehäuses zu bestimmen. Dazu ist es lediglich notwendig ein entsprechendes Steuerteil außerhalb des Projektionsgehäuses für die Bedienung der Vorrichtung zur Verfügung zu stellen.

Eine weitere vorteilhafte Ausgestaltung der Erfindung sieht vor, daß der Drehantrieb einen die Drehbewegung erzeugenden Schrittmotor umfaßt. Durch einen derartigen Drehantrieb kann auf einfache Weise die Position der Videokamera und damit die Orientierung des projizierten Bildes auf dem Wiedergabegerät eingestellt werden. Der Motor läßt sich durch eine Steuereinheit ansteuern und durch Knopfdruck bedienen. Ein Schrittmotor erlaubt eine sehr genaue Winkeleinstellung.

Vorzugsweise kann die Drehbewegung des Drehantriebs auch von Hand, vorzugsweise mit Grob- und/oder Feineinstellung, erzeugt werden. Eine derartige Ausgestaltung ist zwar weniger komfortabel als die Verwendung eines Motors, ermöglicht jedoch eine wesentlich preiswertere Herstellung des Drehantriebs. Der Drehantrieb kann zum Beispiel von einem außerhalb des Projektionsgehäuses liegenden Rad oder ähnlichem Element per Hand angetrieben werden. Dabei ist es von Vorteil, wenn sowohl eine Fein- als auch eine Grobeinstellung möglich ist. So kann die Videokamera mit der Grobeinstellung schnell in die Nähe der gewünschten Position verfahren werden und die Feineinstellung für die abschließende Korrektur dienen. Eine solche Vorrichtung ist wenig fehleranfällig, da es sich hierbei lediglich um mechanische Bauteile handelt, die über Jahre hinweg ohne Wartung bei geringem Verschleiß sicher funktionieren.

Vorteilhaft ist ferner, wenn innerhalb des Projektionsgehäuses wenigstens eine Linse in den Lichtstrahlengang zwischen der Eintrittsöffnung des Projektionsgehäuses und der Videokamera bewegbar ist. Auf diese Weise ist es möglich innerhalb des Projektionsgehäuses Einfluß auf das projizierte Bild zu nehmen, bevor die Strahlen in die Videokamera gelangen. Diese Einflußnahme kann unter anderem eine weitere Vergrößerung oder Verkleinerung und/oder Schärfung des Bildes beinhalten. Um entscheiden zu können, ob auf das projizierte Bild noch Einfluß innerhalb des Projektionsgehäuses genommen werden soll und wie Einfluß genommen werden soll, ist es sinnvoll, wenigstens eine Linse wahlweise in den Lichtstrahlengang bewegen zu können. Bei Bedarf können auch mehrere voneinander unabhängig in den Lichtstrahlengang bewegbare Linsen in dem Projektionsgehäuse vorgesehen sein, die wahlweise in den Lichtstrahlengang verbracht werden können. Sie können auch miteinander kombiniert werden, so daß die Wirkungen sich einander überlagern und/oder ergänzen.

Eine weitere zweckmäßige Ausgestaltung der Erfindung sieht vor, daß die wenigstens eine Linse an einem Schwenkhebel gelagert ist. Dieser kann wippenartig schwenkbar im Projektionsgehäuse gelagert sein und als doppelarmiger Hebel gebildet sein, wobei der eine Hebelarm aus dem Projektionsgehäuse reicht und als Griff dient und an dem innerhalb des Projektionsgehäuses befindliche Hebelarm die wenigstens eine Linse angeordnet ist. Die Verwendung eines derartigen Schwenkhebels erlaubt es, die wenigstens eine Linse auf einfache und kostengünstige Weise mit einfachen Mitteln wahlweise in oder aus dem Strahlengang zu verbringen. Der Schwenkhebel ist im Projektionsgehäuse in einem ortsfesten Gelenk gelagert. Von dem Gelenk gehen zwei Hebelarme aus. Der eine Hebelarm dient als Griff und reicht aus dem Projektionsgehäuse, von wo aus er leicht von dem Anwender bedient werden kann. Der zweite Hebelarm innerhalb des Projektionsgehäuses weist einen Aufnahmebereich mit wenigstens einer darin befindlichen Linse auf. Durch Bedienung des Hebelarms, welcher als Griff dient, kann der Schwenkhebel in dem Gelenk bewegt werden, so daß die Linse in ihre Position verbringbar ist. Mit einem solchen Schwenkhebel lassen sich auf einfache Weise eine oder mehrere Linsen in den Lichtstrahlengang innerhalb des Projektionsgehäuses verbringen und wieder entfernen.

Eine weitere vorteilhafte Ausgestaltung der Erfindung sieht vor, daß der Schwenkhebel in wenigstens einer Position einrastbar ist, zumindest in der Position, in welcher sich die Linse im Lichtstrahlengang befindet. Durch die Verwendung eines Schwenkhebels, welcher in bestimmten Positionen einrastet, ist eine sichere Positionierung der Linse gewährleistet. Bereits eine kleine Verschiebung der Linse im Lichtstrahl führt zu einer erheblichen Verzerrung des projizierten Bildes und daher ist eine sichere Positionierung von Bedeutung. Es kann sich auch eine weitere Einrastposition als sinnvoll erweisen. Zum Beispiel ist es von Vorteil, wenn eine zweite Einrastposition die Linse außerhalb des Lichtstrahlengangs sichert. So ist gewährleistet, daß die Linse durch eine unbemerkte Berührung des Schwenkhebels nicht in den Lichtstrahlengang verbracht wird, wodurch unerwünschte Bildaufnahmen entstehen könnten

Besonders vorteilhaft ist es, wenn sich an der Videokamera und/oder einem sich mit der Videokamera im Inneren des Projektionsgehäuses drehenden Teil ein Signalelement befindet, das von außen erkennbar ist. Durch die Verwendung eines von außerhalb des Projektionsgehäuses erkennbaren Signalelements an der Videokamera oder an einem der mit der Videokamera drehenden Teile ist einfach zu erkennen, in welcher Position sich momentan die Videokamera befindet. Dies kann von besonderer Bedeutung sein, um die Orientierung des beobachteten Bereichs eines Objekts dem projizierten Bild zuordnen zu können. Besonders vorteilhaft ist die Erfindung derart ausgestaltet, daß das Signalelement ein Leuchtelement, vorzugsweise ein LED, ist, und wenigstens eine Öffnung und/oder ein Fenster in dem Projektionsgehäuse angeordnet ist, durch welches die Position des Signalelements erkennbar ist. Auf diese Weise steht ein Signalelement zur Verfügung, das leicht durch die wenigstens eine Öffnung und/oder ein Fenster zu erkennen ist. Durch die Anordnung der Öffnung und/oder des Fensters entlang des Projektionsgehäuses kann die Position des Signalelements leicht ausgemacht werden. Es ist bei der Verwendung des Signalelements wichtig, daß ein Eindringen von Schmutz und Staub vermieden wird. Daher sind Fenster in dem Projektionsgehäuse einfachen Öffnungen vorzuziehen. Ein Lichteinfall in den Innenraum des Projektionsgehäuses kann durch eine geeignete, zugleich mit der Videokamera drehbare Abdeckung der Fenster erzielt werden.

Eine weitere Ausgestaltung sieht vor, daß an dem Projektionsgehäuse ein Adapter fixierbar ist und das Projektionsgehäuse mit diesem Adapter am Mikroskop befestigbar ist. Die Verwendung gegeneinander austauschbarer Adapter an dem Projektionsgehäuse dient zur Verwendung eines einzigen Projektionsgehäusetyps an verschiedenen Mikroskopen. Das Projektionsgehäuse ist demnach für verschiedene Mikroskoptypen verwendbar. Der dem jeweiligen Mikroskop zugehörige Adapter kann in einem dafür vorgesehenen Aufnahmebereich am Projektionsgehäuse befestigt werden, und mit diesem Adapter das Projektionsgehäuse an dem Mikroskop fixiert werden.

Eine weitere Ausgestaltung sieht vor, daß die Videokamera eine CCD-Videokamera ist. Eine CCD-Videokamera bietet einige wesentliche Vorteile zu nicht digitalen Videokameras. Die Bilddaten der digitalen Videokameras können über eine Schnittstelle zu einem Rechner geleitet werden. Die CCD-Videokamera übermittelt die Daten der Bildaufnahmen an den Rechner, der diese speichern und weiterverarbeiten kann. Die Weiterverarbeitung kann beispielsweise die Auszählung und Ausmessung von Objektstrukturen umfassen. Diese als Daten vorliegenden Bildaufnahmen können weiterhin via Internet versandet werden, wodurch ein zügiger und weltweiter Austausch von Informationen geboten wird.

Die Vorrichtung gemäß der Erfindung bildet eine autarke Einheit, die vorzugsweise alle notwendigen Bauteile im Projektionsgehäuse enthält. Durch die autarke Ausgestaltung ist eine kompakte Einheit geschaffen, welche aufeinander abgestimmte Bauteile in sich birgt. Die in dem Projektionsgehäuse enthaltenen Bauteile sind vor äußeren Einflüssen weitestgehend geschützt und der Anwender wird nicht unnötig mit der im Projektionsgehäuse enthaltenen Technik konfrontiert. Lediglich Schalter und Bedienelemente für die Bedienung und Bewegung der Kamera sind von außen erreichbar in dem Projektionsgehäuse integriert.

Eine weitere Ausgestaltung sieht vor, daß in dem Projektionsgehäuse Anschlüsse vorliegen, vorzugsweise ein Druckeranschluß, ein Anschluß für Wiedergabe- und Aufzeichnungsgeräte und ein Anschluß für eine Energieversorgung. Mittels dieser Anschlüsse kann die Vorrichtung einfach mit einer Stromversorgung, einem Rechner, einem Drucker und anderen derartigen Elementen in Verbindung gebracht werden.

Eine weitere Ausgestaltung sieht vor, daß ein internes Regelungselement vorgesehen ist, welches über die Anschlüsse mit einem externen Regelungselement, vorzugsweise einem Rechner, kontaktierbar ist. Die Einrichtung eines internen Regelelements erlaubt es von einem externen Regelelement aus, die Funktionen der erfindungsgemäßen Vorrichtung zu regeln, indem in das externe Regelelement die Regelkommandos eingegeben werden.

Die Regelkommandos werden daraufhin vom externen Regelelement an das interne Regelelement weitergegeben. Die Weitergabe erfolgt beispielsweise durch eine Kabelverbindung zwischen externem und internem Regelelement. So ist die Vorrichtung in eine zentrale Regelung einbindbar. Es sind keine Schalter an der erfindungsgemäßen Vorrichtung zu bedienen und im idealen Fall können alle die Mikroskopie betreffenden Funktionen von einem zentralen bzw. externen Regelungselement aus bedient werden.

Weitere Vorteile und Merkmale der Erfindung sind der folgenden Figurenbeschreibung und den Figuren zu entnehmen. Es zeigen:
- Fig. 1: eine schematische Schnittdarstellung einer erfindungsgemäßen vorrichtung,
- Fig. 2: eine schematische Schnittdarstellung entlang der Schnittebene II-II aus Fig. 1,
- Fig.3: eine schematische Seitenansicht auf die erfindungsgemäße Vorrichtung.

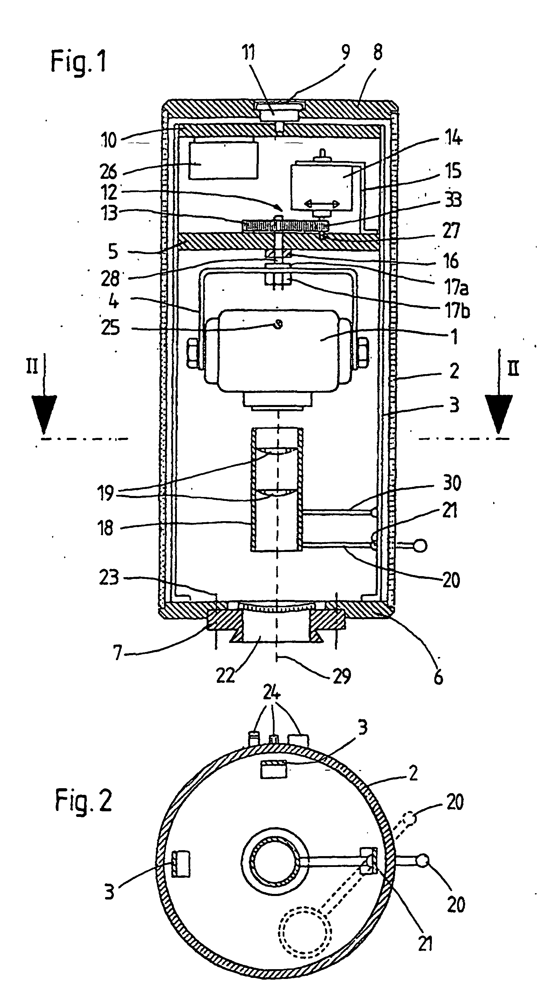

Bei der in Fig. 1 dargestellten Ausführungsform der Erfindung ist eine CCD-Videokamera 1 innerhalb eines Projektionsgehäuses 2 angeordnet, welches aus einem Deckel 8, einem unteren Boden 6 mit einer Eintrittsöffnung 22 und einem Zylinder gebildet ist.

In der Eintrittsöffnung 22 des Bodens 6 ist ein Adapter 7 angeflanscht, der mit einer Schraubverbindung 23 gesichert ist. Die Schraubverbindung 23 kann selbstverständlich durch andere gleichwirkende Verbindungselemente ersetzt werden. Der Adapter 7 dient dazu, daß die erfindungsgemäße Vorrichtung an einem optischen Gehäuse eines Mikroskops befestigt werden kann. Das optische Gehäuse in einem Mikroskop ist in der-Regel der Tei des Mikroskops, in dem sich eine Vielzahl der Linsen befindet. In dem dargestellten Fall ist der Adapter 7 schwalbenschwanzförmig ausgebildet und kann in ein entsprechend korrespondierendes Gegenstück des optischen Gehäuses des Mikroskops eingeschoben werden. Durch die einfache Weise mit welcher der Adapter 7 gegen einen andersförmigen Adapter 7 ausgetauscht werden kann, kann die erfindungsgemäße Vorrichtung auf einer Vielzahl verschiedener Mikroskope befestigt werden und dort Anwendung finden. Mit der Befestigung des Projektionsgehäuses auf dem optische Gehäuse des Mikroskops gelangt kein Licht aus der Umgebung in den Innenraum des Projektionsgehäuses, es entsteht der sogenannte Schwarzkammer Effekt.

Innerhalb des Projektionsgehäuses 2 befindet sich ein Gestell bestehend aus drei Flachprofilen 3 und einem horizontalen, scheibenförmigen, an den Flachprofilen 3 befestigten Schließträger 10 und einem ähnlich wie der Schließträger 10 ausgeformten und ebenfalls an den Flachprofilen 3 befestigten Getriebeträger 5. Die unteren Enden der Flachprofile 3 sind um 90° umgelegt und am Boden 6 mittels Verschweißen, Verschrauben oder ähnlichem befestigt. Am oberen Ende der Flachprofile 3 ist der Schließträger 10 befestigt. Der Schließträger 10 liegt dabei parallel nahebei dem Deckel 8, in welchem ein Schloß 11 eingelassen ist, das durch ein entsprechendes Schließverfahren im Schließträger 10 eingreift, so daß der Deckel 8 über das Schloß 11 fest mit dem Schließträger 10 verbunden ist. Einhergehend mit dieser Schließverbindung wird der Deckel 8 auf dem Zylinder 2, gegebenenfalls mit leichtem Anpreßdruck, befestigt, wodurch der Zylinder 2 wiederum auf dem Boden 6 des Projektionsgehäuses befestigt wird. Auf diese Weise ist eine sichere, stoßfeste und staubabdichtende Konstruktion des Projektionsgehäuses gewährleistet. Innerhalb der Aussparung in dem Deckel 8 oberhalb des Schlosses 11 befindet sich ein Stopfen 9, der das Schloß 11 vor einem direkten Zugriff bewahrt und somit eine ungewollte Öffnung und Verschmutzung des Schlosses 11 vermeidet.

Parallel zu dem Schließträger 10 befindet sich der Getriebeträger 5, der ebenfalls von den Flachprofilen 3 getragen wird. Am Getriebeträger 5 ist ein Drehantrieb befestigt bestehend aus einer Motorhalterung 15, in welcher ein Motor 14 mit senkrechter Welle 27 gehalten wird, einem Getriebe 12, einer weiteren senkrechten Welle 28, die mit dem Videokamerahalter 4 verbunden ist, wobei auf den Wellen 27, 28 Ritzel 13, 33 befestigt sind. Die senkrechte Welle 27 des Motors 14 erstreckt sich nach unten hin aus dem Motor 14 in eine kleine Ausnehmung in dem Getriebeträger 5, so daß die Welle 27 neben der Lagerung in dem Motor 14 zusätzlich im Getriebeträger 5 gelagert ist. Auf der Welle 27 des Motors 14 befindet sich ein Ritzel 33, welches in das korrespondierende Ritzel 13 auf der Welle 28 eingreift und gemeinsam das Getriebe 12 bilden. Die Welle 28 weist unterhalb des Getriebeträgers 5 einen Stellring 16 auf durch den eine sichere Führung des Ritzels 13 im Getriebe 12 gewährleistet ist. Durch Einschalten des Motors 14 überträgt das Getriebe 12 eine Drehbewegung auf die Welle 28 sowie auf den Videokamerahalter 4, welcher mit einer Öffnung auf der Welle 27 zwischen einer mit der Welle 27 fest verbundenen Scheibe 17a und einer Mutter 17b festgeklemmt steckt. Der Videokamerahalter 4 ist zweiarmig bügelartig ausgestaltet, wobei die sich, gegenüberliegenden Arme über eine Schraubverbindung mit je einer Seite der Videokamera 1 verbunden sind. Somit ist die Videokamera 1 durch mittelbaren Kraftschluß mit dem Motor 14 drehbar gelagert.

Statt einem Motor 14 kann der Drehantrieb von Hand angetrieben werden. Diese Möglichkeit ist jedoch in der in den Figuren gezeigten Ausgestaltung der Erfindung nicht vorgesehen. Für eine derartige Ausgestaltung weist das Getriebe 12 eine Welle auf, die aus dem Projektionsgehäuse reicht, an dessen äußeren Ende sich beispielsweise ein Rad befindet mit welchem eine Drehbewegung auf die Videokamera 1 übertragen werden kann. Vorteilhaft ist es, wenn das Getriebe 12 eine Grobeinstellung und eine Feineinstellung aufweist, um eine schnelle und genaue Einstellung der Position der Videokamera 1 zu ermöglichen.

Durch die Eintrittsöffnung 22 im Boden 6 bzw. in dem Adapter 7 tritt im Betriebszustand ein Lichtstrahl des projizierten Bilds ein, der aus dem optischen Gehäuse des Mikroskops austritt. Dies ist das einzige Licht, das in das Projektionsgehäuse 2 fallen darf, da das streuende Licht aus der Umgebung die Qualität der Bildaufnahme deutlich vermindern würde. Der Lichtstrahl gelangt senkrecht in das Projektionsgehäuse und folgt der optischen Achse 29 der CCD-Videokamera 1. Bei Drehung der Videokamera 1 um ihre optische Achse 29 nimmt die Videokamera 1 eine Drehung des projizierten Bildes auf, so daß sich das mit der Videokamera 1 aufgenommene projizierte Bild - bei der Betrachtung, beispielsweise auf einem Monitor, dreht. Die optischen Achsen stimmen überein, können aber auch geringfügig zueinander parallel versetzt sein.

In dem Strahlengang innerhalb des Projektionsgehäuses liegen zwei optische Linsen 19, die das projizierte Bild nochmals vor Eintritt in die Videokamera 1 beeinflussen, beispielsweise um eine weitere Vergrößerung des projizierten Bildes vorzunehmen. Die optischen Linsen 19 sind in einem Linsenaufnahmebereich 18 aufgenommen. Der Linsenaufnahmebereich 18 ist in Form eines senkrechten Rohrs ausgebildet, durch das der in das Projektionsgehäuse einfallende Lichtstrahl hindurchfällt. Der Linsenaufnahmebereich 18 ist Teil eines Schwenkhebels 20. Dieser ist an einem Gelenk 21 schwenkbar gelagert, wobei das Gelenk 21 in einem der Flachprofile 3 fixiert ist. Während der eine Hebelarm den Linsenaufnahmebereich 18 aufweist, erstreckt sich der andere Hebelarm des Schwenkhebels 20 durch eine lichtdichte Öffnung aus dem Projektionsgehäuse 2 heraus und dient als Griff für die Bedienung des Schwenkhebels 20. Diese Öffnung in dem Projektionsgehäuse ist derart abgedichtet, daß kein Licht von außen entlang des Hebelarms in das Projektionsgehäuse einfallen kann. Der Hebelarm, der den Linsenaufnahmebereich 18 aufweist, wird durch einen parallelen, etwas über dem Hebelarm gelegenen, ebenfalls gelenkig gelagerten Stützarm 30 unterstützt, um eine sichere Positionierung der Linsen 19 sicherzustellen.

Der Schwenkhebel 20 ist ebenfalls der Fig. 2 zu entnehmen, die eine schematische Darstellung der II-II Schnittebene der Fig. 1 darstellt. Der Schwenkhebel 20 ist hierin in zwei verschiedenen Positionen gezeigt. In der Position, in welcher der Schwenkhebel in durchgezogenen Linien dargestellt ist, befinden sich die Linsen 19 im Lichtstrahlengang, der in die Videokamera 1 führt. In der Position, in welcher der Schwenkhebel 20 in gestrichelten Linien dargestellt ist, befinden sich die Linsen 19 außerhalb des Lichtstrahlengangs, der in die Videokamera 1 führt.

Das Gelenk 21 sieht eine Rastvorrichtung vor, in welcher der Schwenkarm 20 in den gezeigten Positionen einrastet. Die Rastvorrichtung ist vorteilhaft, da es sicherzustellen ist, daß die Linsen 19 korrekt in dem Strahlengang liegen. Eine kleine Fehlausrichtung kann erheblichen Einfluß auf das in die CCD-Videokamera 1 einfallende projizierte Bild haben.

Weiterhin sind aus der Fig. 2, Anschlüsse 24 am Zylinder des Projektionsgehäuses 2 zu entnehmen. Diese sind innerhalb des Projektionsgehäuses, mit dem in Fig. 1 zu entnehmenden Regelungselement 26 verbunden und ermöglichen den Kontakt des Regelelements 26 zu Druckern, Rechnern, Bildschirmen, Energiequellen etc.. Das Regelungselement 26 dient der Regelung des Motors 14 und der Videokamera 1 und zum Informationsaustausch zwischen Videokamera und externen Geräten wie oben genannt. Allerdings kann die Videokamera auch direkt an einem entsprechenden Anschluß 24 angebunden sein, um die Bildaufnahmen auf direktem Wege weiterzugeben.

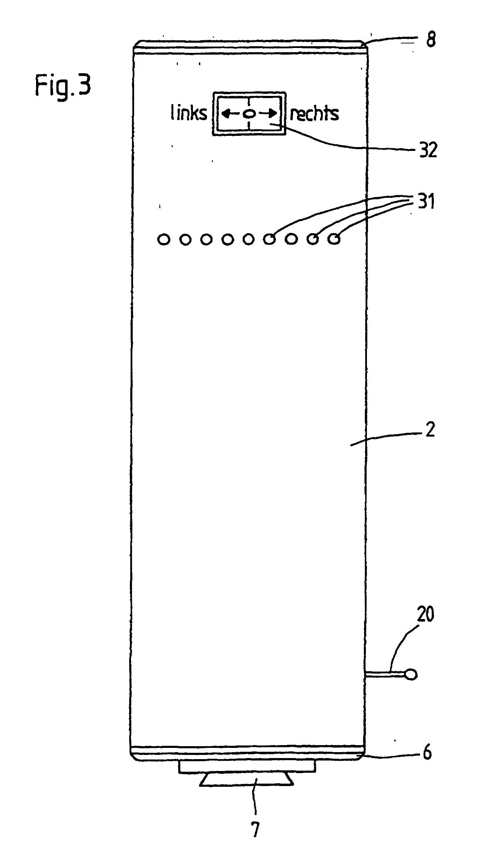

Aus der Fig. 1 ist ein an der Videokamera 1 fixiertes Signalelement 25, das hier als Leuchtelement ausgestaltet ist, zu entnehmen. Die Fig. 3 zeigt das Projektionsgehäuse von außen, wobei im Zylinder runde Fenster 31 eingelassen sind. Das Signalelement 25 innerhalb des Projektionsgehäuses 2 und die Fenster 31 im Zylinder sind so zueinander angeordnet, daß das Signalelement 25 von außen durch die Fenster 31 erkennbar ist. Anhand der Position des Signalelements 25 hinter den horizontal angeordneten Fenstern 31 kann die Position der Videokamera 1 bestimmt werden. Die Wahl derartiger Fenster 31 hat den Vorteil, daß der Zylinder in seiner Festigkeit nur wenig beeinträchtigt wird.

Im idealen Fall läßt sich die Videokamera 1 um 360° drehen. Eine weitere Drehung verbessert nicht die Einsatzmöglichkeit der erfindungsgemäßen Vorrichtung, führt aber zu der Notwendigkeit einer komplizierteren Kabelführung von den drehenden Komponenten zu den ortsfesten Komponenten.

Im Zylinder ist ein Tastschalter 32 eingefügt, mit welchem eine Bedienung des Motors 14 möglich ist. Selbstverständlich können weitere Schalter und Regler in das Projektionsgehäuse vorgesehen werden, um weitere Funktionen zu bedienen. Es sind damit zum Beispiel Funktionen steuerbar, welche die Videokamera betreffen wie Fokus, Tiefenschärfe, etc.. Eine weitere Funktion kann das Verfahren der Kamera entlang ihrer optischen Achse 29 oder entlang des einfallenden Lichtstrahlengangs sein. Die zu dieser Funktion gehörige Vorrichtung ermöglicht es weitere Vergrößerungsmaßstäbe einzustellen, ohne dabei Tiefenschärfe zu verlieren. Diese Ausgestaltung ist der vorliegenden Figuren nicht zu entnehmen. Dadurch, daß alle wichtigen Funktionalitäten der Erfindung direkt im Projektionsgehäuse integriert sind, ist die Vorrichtung autark und einfach einsetzbar. Es sind keine weiteren Geräte für die Funktionstüchtigkeit der Erfindung notwendig. Somit sind weitestgehend zusätzliche Fehlerquellen beim Einsatz der Erfindung vermieden und es wird ein strukturierter, aufgeräumter Arbeitsplatz unter Verwendung der Erfindung gewährleistet. Gleichwohl kann die Erfindung auch an den Anschlüssen 24 über ein Kabel mit einem Rechner als externes Regelelement verbunden werden, welcher mit dem internen Regelungselement 26 in Kontakt tritt und so eine externe Bedienung der Funktionen der erfindungsgemäßen Vorrichtung ermöglicht.

### Bezugszeichenliste

- 1: CCD-Videokamera
- 2: Projektionsgehäuse
- 3: Flachprofil
- 4: Videokamerahalter
- 5: Getriebeträger
- 6: Boden
- 7: Adapter
- 8: Deckel
- 9: Stopfen
- 10: Schließträger
- 11: Schloß
- 12: Getriebe
- 13: Ritzel
- 14: Motor
- 15: Motorhalterung
- 16: Stellring
- 17a: Scheibe
- 17b: Mutter
- 18: Linsenaufnahmebereich
- 19: Linse
- 20: Schwenkhebel
- 21: Gelenk
- 22: Eintrittsöffnung
- 23: Verschraubungen
- 24: Anschlüsse
- 25: Signalelement / Leuchtelement
- 26: internes Regelungselement
- 27: Welle
- 28: Welle
- 29: optische Achse (der Videokamera)
- 30: Stützarm
- 31: Fenster
- 32: Tastschalter
- 33: Ritzel

## Patentansprüche

1. Vorrichtung zur Bildaufnahme eines in einem Mikroskop projizierten Bildes mit einem- an einem Gehäuse des Mikroskops befestigbaren Projektionsgehäuse (2), welches eine darin um eine zur optischen Achse (29) zumindest parallele Achse drehbar gelagert angeordnete Videokamera (1) gegen Lichteinfall von außen abschirmt, wobei das projizierte Bild als Lichtstrahl aus dem Gehäuse des Mikroskops auf die optische Achse der Videokamera (1) gelangt,
**dadurch gekennzeichnet,**
**daß** innerhalb des Projektionsgehäuses (2) wenigstens eine Linse (19) horizontal in ihrer Ebene senkrecht zur optischen Achse (29) in eine Position in den Lichtstrahlengang zwischen der Eintrittsöffnung (22) des Projektionsgehäuses (2) und der Videokamera (1) bewegbar ist.
und **daß** eine Rastvorrichtung zur Einrastbarkeit der Linse in zumindest dieser Position vorgesehen ist.

2. Vorrichtung nach Anspruch 1, **dadurch gekennzeichnet, daß** wenigstens eine Linse (19) an einem Schwenkhebel (20) horizontal verschwenkbar in dem Projektionsgehäuse (2) gelagert ist.

3. Vorrichtung nach Anspruch 2, **dadurch gekennzeichnet, daß** der Schwenkhebel (20) wippenartig schwenkbar im Projektionsgehäuse gelagert ist und ein doppelarmiger Hebel ist, wobei der eine Hebelarm aus dem Projektionsgehäuse reicht und als Griff dient und an dem innerhalb des Projektionsgehäuses befindlichen Hebelarm die Linse (19) angeordnet ist.

4. Vorrichtung nach Anspruch 1, **dadurch gekennzeichnet, daß** die Videokamera (1) um 360° um ihre eigene optische Achse (29) drehbar gelagert ist.

5. Vorrichtung nach Anspruch 1 oder 4, **dadurch gekennzeichnet, daß** die Videokamera (1) innerhalb des Projektionsgehäuses (2) drehbar gelagert und mit einem Drehantrieb verbunden ist.

6. Vorrichtung nach einem dervorstehenden Ansprüche, **dadurch gekennzeichnet, daß** der Drehantrieb einen die Drehbewegung erzeugenden Schrittmotor (14) umfaßt.

7. Vorrichtung nach Anspruch 5, **dadurch gekennzeichnet, daß** die Drehbewegung des Drehantriebs von Hand, vorzugsweise mit Grob- und/oder Feineinstellung, erzeugbar ist.

8. Vorrichtung nach einem der Ansprüche 1 bis 7, **dadurch gekennzeichnet, daß** sich an der Videokamera (1) und/oder einem sich mit der Videokamera (1) im Inneren des Projektionsgehäuses drehenden Teil ein Signalelement (25) befindet, das von außen erkennbar ist.

9. Vorrichtung nach Anspruch 8, **dadurch gekennzeichnet, daß** das Signalelement (25) ein Leuchtelement, vorzugsweise ein LED ist, und daß das Projektionsgehäuse (2) mit wenigstens einer Öffnung und/oder einem Fenster (31) versehen ist, durch welches die Position des Signalelements (25) erkennbar ist.

10. Vorrichtung nach einem der Ansprüche 1 bis 9, **dadurch gekennzeichnet, daß** ein internes Regelungselement (26) vorgesehen ist, welches über Anschlüsse (24) mit einem externen Regelungselement, vorzugsweise einem Rechner, kontaktierbar ist.

## Claims

1. A device for the recording of a picture proyected in a microscope, with a projection cabinet (2) which can be fastened to a cabinet of the microscope, the projection cabinet shielding a pivoted video camera (1) arranged around an axis at least parallel to an optical axis (29) to provide for the said shielding against the incidence of light from outside; whereby the projected picture arrives on the optical axis of the video camera (1) when it emerges as a light beam from the cabinet of the microscope;
according to which
within the projection cabinet (2) at least a lens (19) is movable horizontally in a plane vertical to the optical axis (29) to arrive at a position in the light beam path between the wntrance port (22) of the projection cabinet (2) and the video camera (1);
and that a detent device for the snapping in of the lens has been provided for at least in that position;

2. A device according to claim 1, where at least a lens (19) is arranged in the projection cabinet (2) and can be horizontally pivoted on a swivelling lever (20);

3. A device according to claim 2, where the swivelling lever (20) is carried rockingly pivoted in the projection cabinet and is designed as a two-armed lever, whereby one of the arms juts out of the projection cabinet to serve as a handle, and is arrangedon the lever arm of the lens (19) located within the projection cabinet;

4. A device according to claim 1, where the video camera (1) is carried rotatably by 360° around its own optical axis (29);

5. A device according to claim 1 or 4, where the video camera (1) is rotatably carried within the projection cabinet (2) and is coupled with a rotary drive mechanism.

6. A device according to one of the preceding claims where the said rotary drive mechanism comprises a stepping motor (14) which produces the rotary motion.

7. A device according to claim 5 where the rotary motion of the rotary drive mechanism is induced manually and preferably by a coarse and/or fine setting.

8. A device according to one of the claims 1 to 7, where a signal element (25) visible from outside is arranged on the video camera (1) and/or on an element swivelling within the projection cabinet.

9. A device according to claim 8, where the signal element (25) is a illuminating element, preferably a LED and where the projection cabinet (2) is provided with at least a port and/or a window (31) through which the position of the signal element is recognizable.

10. A device according to one of the claims 1 to 9, where an internal control element (26) is arranged which via connections (24) can be joined to an external control element, preferably a computer.

## Revendications

1. Dispositif pour la prise de vue de l'image projetée d'un microscope, à l'aide d'un boîtier de projection (2) fixable sur le corps du microscope. Ce boîtier contient une caméra vidéo (1) protégée contre l'influence de la lumière. Celle-ci peut tourner autour d'un axe au moins parallèle à l'axe optique (29). Par cela, l'image projetée par le rayon lumineux venant du microscope tombe sur l'axe optique de la caméra vidéo (1). Ce dispositif est **caractérisé par**:
Que, à l'intérieur du boîtier de projection (2) une lentille au moins (19) dans son plan vertical à l'axe optique (29) peut être mue dans une position en le jet de lumière entre l'orifice d'entrée (22) du boîtier de projection (2) et la caméra vidéo (1).
et que, un dipositif à encoches est prévu pour verrouiller la lentille dans cette position, au moins.

2. Dispositif d'après l'exigence 1, **caractérisé par** au moins une lentille (19) montée sur un levier basculant (20) horizontal, lequel est logé dans le boîtier de projection (2).

3. Dispositif d'après l'exigence 2, **caractérisé par** le levier basculant (20), logé dans le boîtier de projection, monté à bascule et formant un levier à deux bras, l'un des bras du levier servant de poignée à l'extérieur du boîtier de projection et l'autre bras à l'intérieur supportant la lentille (19).

4. Dispositif d'après l'exigence 1, **caractérisé par** le montage rotatif de la caméra vidéo (1) décrivant un angle de 360° autour de son propre axe optique.

5. Dispositif d'après l'exigence 1 ou 4, **caractérisé par** une caméra vidéo (1) montée à l'intérieur du boîtier de projection (2) sur des paliers permettant une rotation, et étant entraîné par un mécanisme moteur.

6. Dispositif d'après l'une des exigences décrit ci-dessus, **caractérisé par** un mouvement rotatif actionné par un moteur pas à pas (14).

7. Dispositif d'après l'exigence 5 **caractérisé par** un mouvement rotatif actionné manuellement de préférence avec un ajustement d'approche gros et/ou fin

8. Dispositif d'après les exigences 1 à 7 **caractérisé par** un élément signalétique (25), visible de l'extérieur, appliqué sur la caméra vidéo (1) et/ou sur un élément rotatif tournant avec celle-ci à l'intérieur du boîtier de projection.

9. Dispositif d'après l'exigence 8, **caractérisé par** un élément signalétique (25), constitué par un élément luminescent, de préférence une diode électroluminescente, et sur le boîtier de projection (2) pourvu au moins d'une ouverture et/ou d'une fenêtre (31) par laquelle l'élément signalétique (25) est visible.

10. Dispositif d'après l'une des exigences 1 à 9, **caractérisé par** la mise en place d'un élément de régulation interne (26), lequel est commandé à l'aide des connexions (24), de préférence par un calculateur comme élément de régulation extérieur.
